# DEMANDE DE BREVET EUROPEEN

(11) **EP 0 897 075 A1**
(43) Date de publication de la demande: **17.02.1999**
(21) Numéro de dépôt: 98402047.9
(22) Date de dépôt: 13.08.1998
(51) Int. Cl.: F16J 15/00, F16J 15/32

(54) **Agencement d'étanchéité pour un bout d'arbre**

(30) Priorité: 13.08.1997 FR 9710313
(71) Demandeur: Hispano-Suiza, 75015 Paris (FR)
(72) Inventeur: Leturcq, Michel Marie Maurice, 92500 Rueil Malmaison (FR)

(57) **Abrégé**

Cette invention concerne un dispositif à joint d'étanchéité à lèvre (25) pouvant venir pincer un bout d'arbre (15) placé derrière un bouchon (26). Quand le bouchon (26) est installé et couvre le bout d'arbre en fermant un carter (8), il presse sur un bourrelet de butée (23) du joint (20) et repousse la lèvre (25) vers l'extérieur, si bien que la rotation du bout d'arbre (15) n'use pas le joint. Quand il est retiré, le carter (8) est ouvert mais la lèvre (25) pince le bout d'arbre et rétablit l'étanchéité.

Cet agencement est utile notamment aux bouts d'arbre (15) munis d'une prise d'outil pour imposer une rotation manuelle à une machine tournante pendant une période d'entretien à des fins d'inspection, le bout d'arbre (15) étant entraîné pendant le service normal de la machine.

## Description

L'invention a trait à un agencement d'étanchéité pour un bout d'arbre, et plus particulièrement pour un bout d'arbre logé dans un carter et abrité du dehors par un bouchon qu'on peut retirer à volonté.

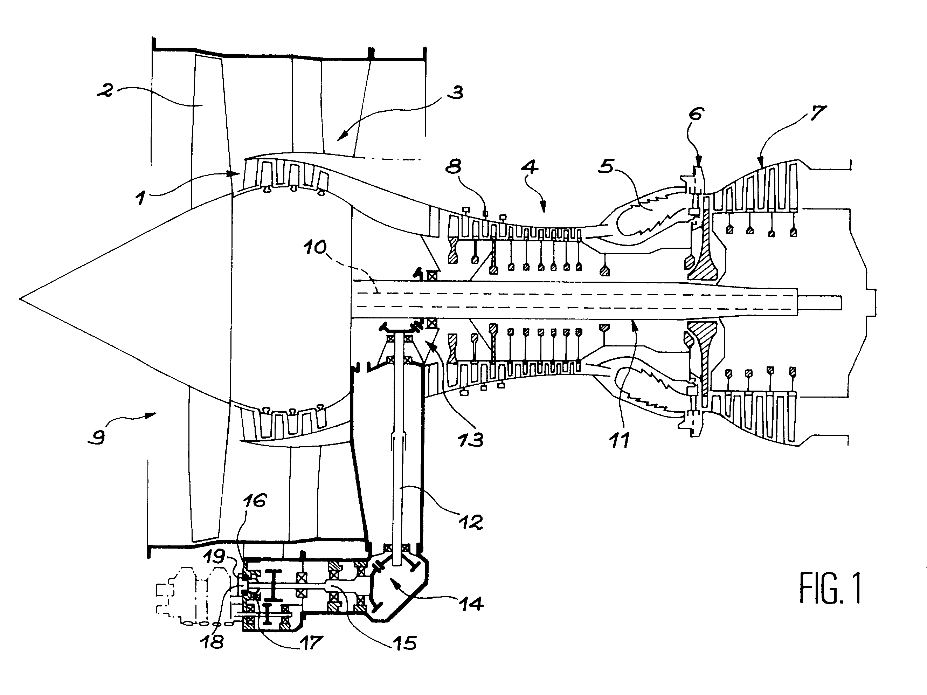

L'intérêt de tels bout d'arbre sera bien compris à l'observation de la figure 1, qui illustre une turbine à gaz. On trouve principalement, d'avant en arrière le long d'une veine 1 annulaire de circulation des gaz, une soufflante 2, un compresseur à basse pression 3, un compresseur à haute pression 4, une chambre de combustion 5, une turbine à haute pression 6 et une turbine à basse pression 7. La veine 1 est occupée par des étages circulaires d'aubes fixes solidaires d'un carter 8 qui la délimite à l'extérieur et d'aubes mobiles liées à un rotor 9 qui la délimite à l'intérieur. Le rotor 9 comprend en outre une ligne d'arbres à basse pression 10 qui relie entre eux la soufflante 2, le compresseur à basse pression 3 et la turbine à basse pression 7 et une ligne d'arbres à haute pression 11 qui relie entre eux le compresseur à haute pression 4 et la turbine à haute pression 6. Les lignes d'arbres 10 et 11 sont coaxiales et la ligne d'arbres à haute pression 11 entoure la ligne d'arbres à basse pression 10. Elle finit à l'avant en un pignon conique qui engrène avec un premier pignon conique d'un arbre de renvoi 12 orienté radialement pour former un renvoi d'angle 13. Un autre renvoi d'angle 14 est formé à l'extrémité opposée de l'arbre de renvoi 12 entre un autre pignon conique de celui-ci et un dernier pignon conique, situé à l'extrémité arrière d'un bout d'arbre 15. Le bout d'arbre 15 s'étend parallèlement aux lignes d'arbres 10 et 11 et à côté du compresseur à basse pression 3 et de la soufflante 2. Son extrémité avant finit derrière une face plane 16 du carter 8, en face d'un orifice 17 fermé par un bouchon 18 dont le coincement est assuré par un anneau élastique 19 engagé entre lui et l'orifice 17. Cet anneau 19 assure aussi l'étanchéité à travers l'orifice 17.

L'utilité du bout d'arbre 15 apparaît pour inspecter individuellement les aubes liées à la ligne d'arbres à haute pression 11 et surtout celles du compresseur à haute pression 4. Il est en effet connu que les aubes sont des structures assez fragiles et qui peuvent être facilement détériorées, par exemple quand un corps étranger est avalé par la turbine à gaz. Le mode d'inspection des aubes consiste tout d'abord à déposer la turbine à gaz et à ouvrir une fenêtre du carter 8 devant un étages d'aubes mobiles à inspecter, généralement le premier du compresseur 4, puis à faire tourner la ligne d'arbres à haute pression 11 pour que toutes les aubes de l'étage passent successivement devant cette fenêtre. Le mouvement est commandé par une clé -non représentée mais d'un modèle courant- engagée sur une prise située à l'avant du bout d'arbre 15. La clé est engagée à travers l'orifice 17 après que le bouchon 18 a été retiré et elle peut être actionnée à la main ou par une machine spéciale. Un inconvénient de cette construction est cependant qu'on peut oublier de replacer le bouchon 18 ensuite, ce qui fait que l'huile contenue dans le carter 8 s'écoule par l'orifice 17 en grande quantité dès que le fonctionnement de la turbine à gaz reprend, ce qui vide très vide le carter 8. Des chutes accidentelles du bouchon 18 ne sont pas non plus à exclure malgré le joint 19.

C'est pour ce prémunir contre ce risque que l'invention fut conçue. Elle consiste à ajouter un joint d'étanchéité entre le bout d'arbre 15 et le carter 8 afin de maintenir l'étanchéité même quand le bouchon 18 est retiré.

Il faut cependant remarquer que le bout d'arbre 15 tourne avec la ligne d'arbre 11 pendant le service de la turbine à gaz et est susceptible d'user rapidement le joint nouvellement ajouté. La contribution essentielle de l'invention à la technique consiste alors en une construction particulière du joint d'étanchéité ajouté et du bouchon qui permet d'échapper à cette difficulté.

Sous sa forme la plus générale, l'invention concerne ainsi un agencement d'étanchéité d'un bout d'arbre placé derrière un bouchon amovible sur un orifice d'un carter de logement du bout d'arbre, caractérisé en ce qu'il comprend un joint d'étanchéité fixé au carter, placé entre le carter et le bout d'arbre et qui comprend une lèvre élastique tendant à reposer sur le bout d'arbre, et en ce que le bouchon comprend un élément de poussoir s'étendant autour du bout d'arbre et repoussant la lèvre élastique du bout d'arbre quand le bouchon est installé sur l'orifice.

Les caractéristiques particulières, objets et avantages de l'invention apparaîtront mieux au commentaire des figures suivantes :
- la figure 1, déjà décrite, illustre une turbine à gaz équipée d'un bout d'arbre susceptible de recevoir l'invention ;
- la figure 2 illustre une première réalisation de l'invention ;
- et la figure 3 illustre une deuxième réalisation de l'invention.

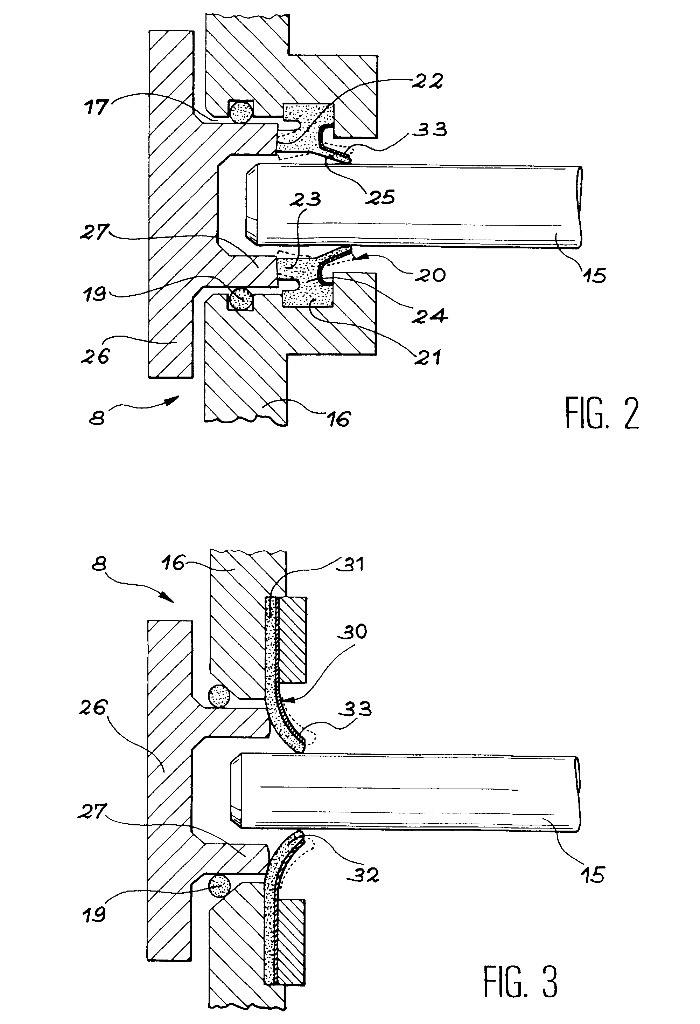

Le joint 20 ajouté avec l'invention et représenté à la figure 2 comprend une bande de retenue 21 encastrée dans une gorge 22 du carter 8, un bourrelet de butée 23 relié à la bande de retenue 21 par un étranglement 24, et une lèvre 25, conique et dont le diamètre s'amenuise vers l'intérieur du carter, liée au bourrelet de butée 23. Le bord le plus étroit de la lèvre 25, opposé au bourrelet de butée 23, frotte sur le bout d'arbre 15 en l'absence de bouchon. Une étanchéité convenable du carter 8 est donc maintenue même dans ces conditions.

Le bouchon 26 modifié selon l'invention comprend un élément de poussoir 27 sur sa face intérieure, de forme cylindrique et qui s'étend autour de l'extrémité du bout d'arbre 15 jusqu'à toucher le bourrelet de butée 23. Quand le bouchon 26 vient à buter contre la paroi 16 du carter, le poussoir 27 a repoussé le bourrelet de butée 23 vers l'intérieur du carter 8, et comme l'étranglement 24 fonctionne comme une articulation, le bourrelet de butée 23 et la lèvre 25 ont subi un léger mouvement de rotation qui fait que la lèvre 25 est ouverte, acquérant un diamètre un peu plus grand, et que son extrémité libre est détachée du bout d'arbre 15 selon l'état déformé représenté en pointillés. La machine peut alors être mise en marche sans que le bout d'arbre 15 mis en rotation ne frotte sur la lèvre 25, qui n'est ainsi usée que dans le cas, signalé ci-dessus, où le bouchon 26 n'a pas été remis par inadvertance ou qu'il est tombé accidentellement.

Le joint 19 torique comprimé assure l'étanchéité de manière classique entre la paroi de la face plane 16 du carter 8 et le bouchon 26.

Une autre conception est représentée à la figure 3 ; le joint sensiblement plan à l'état libre portant ici la référence 30, est de constitution plus simple que le joint 20 précédent, puisqu'il s'agit d'un disque évidé au centre, plat à une partie extérieure 31 qui sert à l'encastrer dans le carter 8 et recourbé vers l'intérieur du carter à une partie intérieure faisant de nouveau office de lèvre 32, dont l'extrémité frotte sur le bout d'arbre 15 au repos. Comme précédemment, le poussoir 27 du bouchon 26 repousse la lèvre 32 quand il est installé, l'ouvre et la dégage du bout d'arbre 15 selon, ici encore, la représentation en pointillés. Contrairement à la construction précédente où le joint 20 était situé plutôt à l'extérieur de la face plane 16, celui-ci est placé à l'intérieur.

Il faut que le joint 20 ou 30 soit en élastomère ou en tout cas en une matière à la fois élastique et souple pour recevoir des déformations temporaires suffisantes qui peut également être par exemple le PTFE.

Il serait facile à l'homme du métier ayant compris le principe de fonctionnement de l'invention de trouver d'autres formes de réalisation convenables. On mentionnera simplement que la lèvre 25 ou 32 peut être renforcée par une âme métallique qui la raidit sans compromettre son élasticité. Une telle âme a été représentée aux figures 2 et 3 et porte la référence 33. Il s'agit dans cette forme de réalisation d'une doublure de la lèvre 32 en forme de lamelle et qui est tournée vers l'intérieur du carter. Ainsi qu'il est bien connu, un tel ressort métallique peut être remplacé par d'autres.

## Revendications

1. Agencement d'étanchéité d'un bout d'arbre (15) placé derrière un bouchon (26) amovible sur un orifice (17) d'un carter (8) de logement du bout d'arbre, caractérisé en ce qu'il comprend un joint d'étanchéité (20, 30) fixé au carter, placé entre le carter (8) et le bout d'arbre (15) et qui comprend une lèvre élastique (25, 32) tendant à reposer sur le bout d'arbre (15), et en ce que le bouchon (26) comprend un élément de poussoir (27) s'étendant autour du bout d'arbre et repoussant la lèvre élastique du bout d'arbre quand le bouchon est installé sur l'orifice.

2. Agencement d'étanchéité selon la revendication 1, caractérisé en ce que le joint (30) est sensiblement plan à l'état libre.

3. Agencement d'étanchéité selon la revendication 1, caractérisé en ce que le joint (20) comprend une bande de retenue (21) encastrée dans le carter (8) et un bourrelet de butée (23) articulé (24) à la bande de retenue et dirigé vers le bouchon (26), la lèvre (25) étant conique, s'amenuisant en s'éloignant du bouchon (26) et rattachée au bourrelet de butée (23).

4. Agencement d'étanchéité selon l'une quelconque des revendications 1 à 3, caractérisé en ce que la lèvre (25, 32) est en matériau élastique et souple.

5. Agencement d'étanchéité selon la revendication 4, caractérisé en ce que la lèvre (25, 32) est en élastomère.

6. Agencement d'étanchéité selon la revendication 4, caractérisé en ce que la lèvre (25, 32) est en PTFE.

7. Agencement d'étanchéité selon l'une quelconque des revendications 4 à 6, caractérisé en ce que la lèvre est renforcée par un ressort métallique (33).
